# EUROPÄISCHE PATENTSCHRIFT

(11) **EP 0 739 283 B1**
(45) Veröffentlichungstag und Bekanntmachung des Hinweises auf die Patenterteilung: **19.08.1998**
(21) Anmeldenummer: 95902747.5
(22) Anmeldetag: 08.12.1994
(51) Int. Cl.: B60T 8/48, B60T 8/32, B60T 8/00, B60K 23/04, B60K 23/08

(54) **ANTRIEBSSCHLUPFREGELSYSTEM MIT PNEUMATISCHER BREMSREGELUNG FÜR MIT EINEM AUTOMATISCHEN SPERRDIFFERENTIAL AUSGESTATTETE FAHRZEUGE, INSBESONDERE NUTZFAHRZEUGE, UND VERFAHREN ZUM EINLEGEN DER DIFFERENTIALSPERRE**
ANTI-SLIP CONTROL SYSTEM WITH PNEUMATIC BRAKE CONTROL FOR VEHICLES FITTED WITH AUTOMATIC DIFFERENTIAL LOCKING, ESPECIALLY UTILITY VEHICLES, AND PROCESS FOR ENGAGING THE DIFFERENTIAL LOCK
SYSTEME D'ANTIPATINAGE A L'ACCELERATION AVEC REGULATION DE FREIN PNEUMATIQUE POUR VEHICULES MUNIS D'UN DIFFERENTIEL AUTOBLOQUANT AUTOMATIQUE, EN PARTICULIER POUR VEHICULES UTILITAIRES, ET PROCEDE D'ENGAGEMENT DU BLOCAGE DU DIFFERENTIEL

(30) Priorität: 13.01.1994 DE 4400667; 21.03.1994 DE 4409585
(43) Veröffentlichungstag der Anmeldung: 30.10.1996
(73) Patentinhaber: KNORR-BREMSE Systeme für Nutzfahrzeuge GmbH, 80809 München (DE)
(72) Erfinder: KLEMENT, ROLAND, D-82407 Haunshofen (DE); MEDERER, Martin, D-80809 München (DE); UTZT, Alfred, D-82256 Fürstenfeldbruck (DE)
(86) Internationale Anmeldenummer: DE9401465
(87) Internationale Veröffentlichungsnummer: WO9519281

(56) Entgegenhaltungen:
- EP-A- 0 510 457
- DE-A- 3 527 959
- DE-A- 4 035 653
- DE-C- 3 545 545
- GB-A- 2 158 903
- GB-A- 2 182 406

## Beschreibung

Antriebsschlupfregelsystem mit pneumatischer Bremsregelung für mit einem automatischen Sperrdifferential ausgestattete Fahrzeuge, insbesondere Nutzfahrzeuge, und Verfahren zum Einlegen der Differentialsperre.

Die Erfindung betrifft ein Antriebsschlupfregelsystem (ASR-System) nach dem Gattungsbegriff des Patentanspruches 1 als auch ein Verfahren zum Einlegen der Differentialsperre.

Bei Kraftfahrzeugen mit zuschaltbaren Antrieben und/oder zuschaltbaren Sperren für Achs- oder Zentraldifferentiale werden im allgemeinen formschlüssige Kupplungen verwendet, um die Nachteile großer Reibungskupplungen zu vermeiden.

Auf diesem technologischen Hintergrund wurden Sperrdifferentiale mit Klauenkupplungen entwickelt (EP-0 510 457 A1), bei welchen die Kupplungsklauen so geformt sind, daß ein Einlegen der Differentialsperre auch bei Differenzdrehzahlen bis zu ca. 150 U/min ermöglicht ist, ohne daß die Kupplungsklauen zerstört werden. Das Einlegen der Differentialsperre erfolgt über einen Druckluftzylinder, welcher über ein mechanisches Gestänge die Klauen der Kupplung zusammendrückt, bis diese einrasten. Sind die Klauen eingerastet, ist keine Betätigungskratt des Druckluftzylinders mehr nötig, da durch die spezielle Formgebung der Kupplungsklauen diese solange nicht gelöst werden, wie vom Motor des Fahrzeugs ein Antriebsmoment übertragen wird. Der Druckluftzylinder wird im Betätigungsfall über ein einfaches, elektropneumatisches 3/2-Wege-Ventil mit Druckluft beaufschlagt.

Bei mit Differentialsperren der in Rede stehenden Art ausgestatteten Nutzfahrzeugen, welche auch im Gelände eingesetzt werden, kommen in zunehmenden Maße Antriebsschlupfregelsysteme (ASR-Systeme) mit pneumatischer Bremsregelung zum Einsatz. Hierbei wird bei Fahrzeuggeschwindigkeiten unter 40 km/h bei Bedarf eine Bremsregelung aktiviert. Dabei wird durch Öffnen des sogenannten ASR-Ventils des abzubremsenden Rades Vorratsdruck bereitgestellt; über ein nachgeordnetes Drucksteuerventil wird dann der Bremsdruck an diesem Antriebsrad so geregelt, daß eine optimale Differenz-Bremswirkung erreicht wird.

Bei einem gattungsgemäßen Antriebsschlupfregelsystem (GB-A-2. 182.406) ist es bereits bekannt, das Sperrdifferential wahlweise durch ein pneumatisches oder hydraulisches Druckmittelsignal nach Maßgabe der ABS/ASR-Regelung zu aktivieren.

Die Aufgabe der vorliegenden Erfindung besteht darin, mit ABS/ASR-Systemen ausgestattete Fahrzeuge, insbesondere Nutzfahrzeuge, welche automatische Differentialsperren der vorgenannten Art aufweisen, hinsichtlich ihrer elektronischen Regelsysteme so auszugestalten, daß ohne wesentlichen Zusatzaufwand neben der automatischen Sperrschaltung für die Differentialsperre die herkömmliche ABS/ASR-Bremsregelung so durchgeführt werden kann, daß das Fahrzeug beim Anfahren am Berg auf µ-Split-Fahrbahnen (Fahrbahnen mit unterschiedlichen Reibwerten der Fahrbahnseiten) auch dann beschleunigt werden kann, wenn die Sperre wegen zu hoher Drehzahldifferenzen noch nicht eingelegt ist; auch soll das 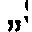 sanfte" Anfahren auf einer µ-Split-Fahrbahn ermöglicht werden, ohne daß die Gefahr des Motorabwürgens besteht.

Zur Lösung dieser Aufgabe dienen die Merkmale nach dem Kennzeichnungsteil des Patentanspruches 1 bzw. des Patentanspruches 4.

Durch die Modifizierung der ABS/ASR-Anlage unter Änderung der Logik des ABS/ASR-Steuergerätes ist es in vorteilhafter Weise möglich, unterhalb eines im wesentlichen durch die Feder-Rückstellkraft des Sperrdifferentials vorbestimmten Druckniveaus die herkömmliche Bremsregelung an den Antriebsrädern des Fahrzeugs vorzunehmen, d.h. das Betätigungsventil des Druckluftzylinders für das Sperrdifferential wirkt als normales ASR-Ventil, wenn die Regellogik einen Haftwertunterschied zwischen linkem und rechtem Antriebsrad erkennt und diesen ausregeln will. Die Logik ist hierbei so ausgelegt, daß die Bremsregelung solange beibehalten bleibt, bis vorzugsweise wenigstens zwei für das Einlegen der Differentialsperre vorgegebene Bedingungen erfüllt sind. Erst dann wird das Betätigungs- bzw. ASR-Ventil voll durchgesteuert, um die Sperre am Differential einzulegen. Ein Abwürgen des Motors wird hierdurch sicher vermieden. Auch werden die Klauen der Sperre festigkeitsmäßig weit weniger beansprucht, da die Drehzahlen der Antriebsräder vor dem Einlegen der Sperre synchronisiert werden.

Vorteilhafte Ausgestaltungen und Weiterbildungen sind in weiteren Patentansprüchen aufgeführt.

Die Erfindung ist nachfolgend anhand eines Ausführungsbeispiels unter Bezugnahme auf die dargestellte Zeichnung erläutert.
Fig. 1 gibt ein Schema des ASR-Systems mit pneumatischer Bremsregelung und automatischem Sperrdifferential gemaß der Erfindung wieder;
Fig. 2 ist eine der Fig. 1 vergleichbare Ansicht der erfindungsgemäßen Anordnung mit unterschiedlicher Position der gegen Betätigungskraft des Sperrdifferentials wirkenden Feder; und
Fig. 3 ist eine schematische Darstellung der erfindungsgemäßen Anordnung an einem Nutzfahrzeug mit 2 angetriebenen Hinterachsen.

Bei der in der einzigen Zeichnung schematisch dargestellten Anlage ist ein ASR-Ventil 1 vorgesehen, welches an einen Druckluft führenden Vorrat 3 angeschlossen ist. Das ASR-Ventil 1 ist ferner an einen Druckluftzylinder 5 angeschlossen und wirkt gegenüber diesem in nachfolgend beschriebener Weise erfindungsgemäß als Betätigungsventil. Der Druckluftzylinder 5 betätigt über ein Gestänge 7 ein Sperrdifferential 9 bzw. dessen Kupplungsklauen 11, welche gegen die Kraft einer Feder 13 in gegenseitigen Eingriff bringbar sind, um die Sperre einzulegen. Bei einem Sperrdifferential der eingangs genannten Art ist bei eingerasteten Kupplungsklauen keine Betätigungskraft des Druckluftzylinders 5 mehr nötig, da durch die spezielle Formgebung der Kupplungsklauen diese solange nicht gelöst werden können, wie vom Motor des Fahrzeugs ein Antriebsmoment übertragen wird. Vom ASR-Ventil 1 zweigt ferner eine Verbindung zu einem Select-high-Ventil 15 (Wechselventil bzw. Zweiwegeven til) ab, an welches ABS-Drucksteuerventile 17 und 19 für Bremszylinder 21 und 23 der Antriebsräder 25 und 27 des Fahrzeugs angeschlossen sind.

Von der herkömmlichen Betriebsbremsanlage (BBA) des Fahrzeugs führt eine weitere Verbindung zum Select-high-Ventil 15, derart, daß bei inaktivem ASR-Regelvorgang bzw. inaktiver Betätigung der Sperre herkömmliche Bremsbetätigung der Bremszylinder 21 und 23 für die Antriebsräder ermöglicht ist.

Ein ASR-Regelvorgang der schematisch dargestellten Anlage in Verbindung mit Sperrenbetätigung läuft wie folgt ab:

Nach Beginn der ASR-Regelung bleibt das gesamte Brems- und Sperrsystem solange inaktiv, bis die Regellogik einen Haftwertunterschied zwischen linkem und rechtem Antriebsrad erkennt und ausregeln will. Ab diesem Augenblick wird das ASR-Ventil 1 getaktet so betrieben, daß im Mittel ein Druck ausgesteuert wird, welcher unterhalb der Schwelle zum Einlegen der Sperre, d.h. zum Einlegen der Kupplungsklauen 11 des Sperrdifferentials 9 liegt. Das ABS-Drucksteuerventil des nicht gebremsten Rades wird auf "Halten" geschaltet. Über das Drucksteuerventil des gebremsten Antriebsrades wird normal die Bremsregelung durchgeführt; über diese Bremsregelung kann sich nun das Antriebsmoment "abstützen" wodurch über das Antriebsrad mit gutem Haftwert eine Antriebskraft übertragen werden kann. Die Bremsregelung wird solange beibehalten, bis folgende beide Bedingungen zugleich erfüllt sind:
1. Das Fahrzeug bewegt sich mit einer bestimmten Mindestgeschwindigkeit, bei spielsweise mit 5 km/h;
2. Beide Antriebsräder drehen sich näherungsweise gleich schnell.

Sind diese Bedingungen erfüllt, dann wird das ASR-Ventil 1 im Sinne des Betätigungsventils für den Druckluftzylinder 5 voll durchgesteuert, um die Sperre einzulegen. Gleichzeitig werden beide ABS-Drucksteuerventile der Antriebsachse auf "Entlüften" gestellt. Dieser Zustand wird solange beibehalten, bis sichergestellt ist, daß die Kupplungsklauen der Sperre eingelegt sind. Bei Sperrdifferentialen der in Rede stehenden Art wurde festgestellt, daß ein Zeitraum von 2 Sekunden auf jeden Fall ausreichend ist. Nach Ablauf dieser Zeit wird das Betätigungs. bzw. ASR-Ventil wieder entregt und die ABS-Drucksteuerventile werden auf "Belüften" gestellt. Die Sperre bleibt nun selbständig solange eingelegt, bis kein Motormoment mehr anliegt. Ist dies der Fall, wird durch die Kraft der Feder 13 die Sperre selbsttätig wieder geöffnet.

Ohne Beachtung der vorstehend genannten Bedingungen würde das beschriebene System bei zügigerem Anfahren auf µ-Split-Fahrbahnen Problemen unterliegen, da die Differenzdrehzahlen der Antriebsräder so schnell so groß werden können, daß ein Einlegen der Sperre aus mechanischen Gründen nicht mehr möglich wäre. Gemäß der Erfindung kann die ASR-Regelung, wie vorstehend dargelegt, eine reine "Select-low"-Regelung durchführen, bis durch die Reduzierung des Antriebsmomentes eine weitgehende Angleichung der Drehzahlen der Antriebsachse herbeigeführt und ein Einlegen der Sperre ermöglicht ist.

Durch die erfindungsgemäße Regelung unter Einbeziehung der Bedingungen wird auch dem Problem des Anfahrens am Berg entsprochen:

Entsteht die vorgenannte "Select-low"-Phase beim Anfahren am Berg, so würde das Fahrzeug zunächst zurückrollen. Da die ABS-Elektronik nicht zwischen Vorwärts- und Rückwärtsfahrt unterscheiden kann, würde in diesem Fall die Sperre bei einer unzulässig hohen Drehzahl eingelegt werden, weil die negative Geschwindigkeit des Rades auf dem hohen Haftwert von der Elektronik als positive Geschwindigkeit gewertet wird. Durch Beachtung der Bedingungen für die Bremsregelung wird diesem Problem begegnet.

Ein Problem der reinen "Select-low"-Regelung könnte auch bei einem "sanften" Anfahren auf einer µ-Split-Fahrbahn, also einer Fahrbahn mit ungleichen Haftwerten, auftreten, da die Sperre u.U. zu früh eingelegt werden könnte, so daß die Gefahr des Motorabwürgens bestehen würde. Durch das Einlegen der Sperre würde ja zwangsweise die Drehzahl des am niedrigeren Haftwert laufenden Rades dem am guten Haftwert liegenden, noch fast stehenden Rad angeglichen werden. Die erfindungsgemäße Regelung setzt jedoch voraus, daß sich das Fahrzeug mit einer bestimmten Mindestgeschwindigkeit bewegt; das Problem des Abwürgens ist hierdurch ausgeschlossen.

Die erläuterten Probleme bei Existenz zu hoher Differenzdrehzahl, bei Anfahren am Berg und bei einem "sanften" Anfahren auf einer µ-Split-Fahrbahn werden durch die erfindungsgemäße Anpassung der ABS/ASR-Logik unter Beachtung vorbestimmter Bedingungen vermieden, da der Effekt ausgenützt wird, daß das ASR-Ventil, welches den Druckluftzylinder mit Druckluft beaufschlagt, unterhalb einer Druckschwelle derart getaktet betrieben werden kann, daß zusätzlich die herkömmliche Bremsrege. lung durchführbar ist.

Durch den der Erfindung eigenen Gedanken wurde ermöglicht, ohne wesentlichen Zusatzaufwand neben der automatischen Sperrschaltung auch die herkömmliche ASR-Bremsregelung durchzuführen; eine universelle Brems- und Sperrenregelung ist hierdurch geschaffen. Ein weiterer zusätzlicher Vorteil der in der einzigen Zeichnung wiedergegebenen Anlage ist auch darin zu sehen, daß bei in Eingriff befindlichen Kupplungsklauen und gleichzeitiger Deaktivierung der ABS/ASR-Regelung ein "Durchsteuern" der Betriebsbremsanlage über das Select-high-Ventil 15 unter Verwendung gleicher Bauteile, d.h. unter Verwendung der Drucksteuerventile 17 und 19, ermöglicht ist.

Das ASR-Ventil kann im Rahmen des der Erfindung eigenen Gedankens auch so betrieben werden, daß wenigstens 2 Druckniveaus mehr oder weniger stationär einstellbar sind; es kann sich hierbei z.B. um ein Proportionalventil handeln.

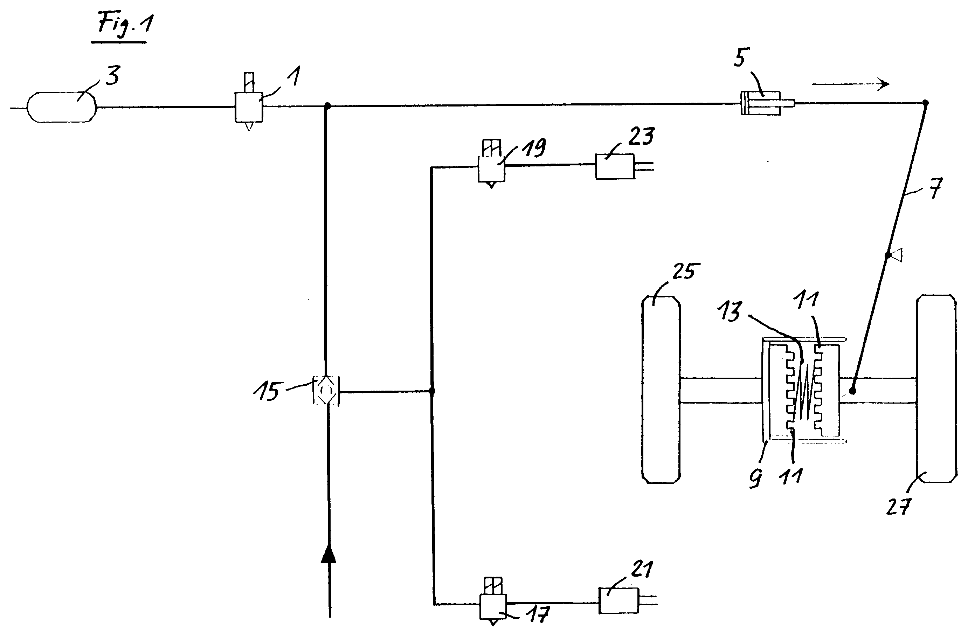

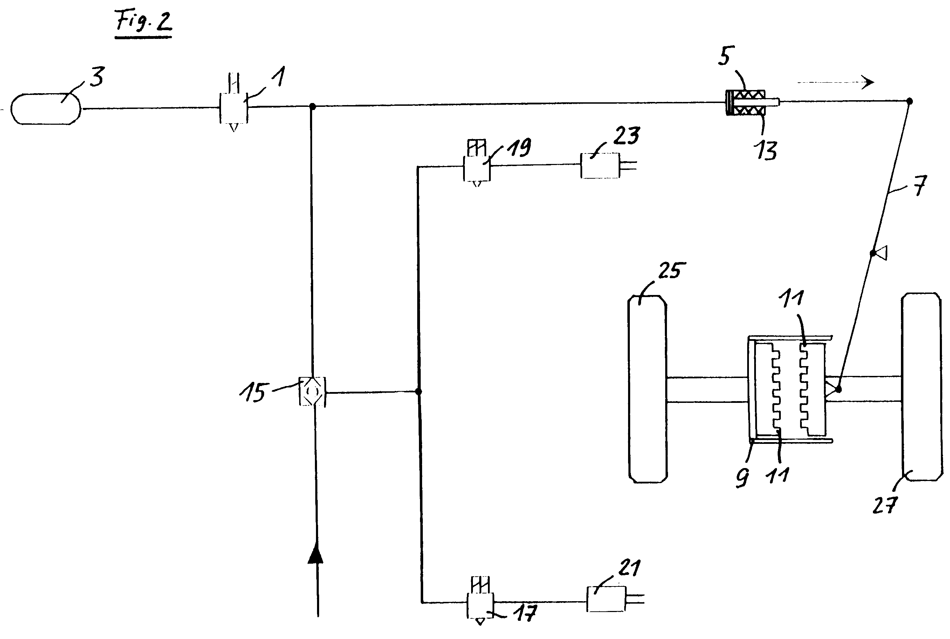

Die Feder 13 ist in Fig. 1 als im Sperrdifferential befindlich wiedergegeben; natürlich kann die Feder 13 auch unmittelbar dem Druckluftzylinder 5 zugeordnet (Fig. 2) oder an anderer Position der Betätigung vorgesehen sein.

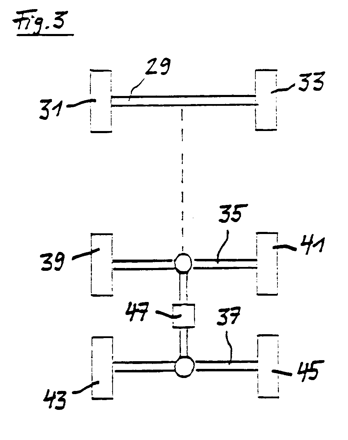

In Fig. 3 der Zeichnung ist schematisch die Anwendung des erfindungsgemäßen Prinzips an einem Nutzfahrzeug mit 2 Hinterachsantriebswellen wiedergegeben. Das Nutzfahrzeug weist eine nicht angetriebene Vorderachse 29 mit Vorderrädern 31 und 33 und 2 Hinterachsen mit Hinterachsantriebswellen 35 und 37 auf. Den beiden Hinterachsantriebswellen sind angetriebene Hinterräder 39, 41 und 43, 45 zugeordnet. Gemäß, der Erfindung ist eine dem Sperrdifferential 3 vergleichbare Längssperre 47 zwischen die Hinterachsantriebswellen 35 und 37 geschaltet. Auch bei dieser Ausgestaltung ist es möglich, unterhalb einer Druckschwelle mit ASR-Regelung bekannter Art für die Hinterräder 39 - 45 zu wirken, während bei Überschreiten des Mindestdruckes und Erfüllung vorbestimmter Bedingungen eine Betätigung der Längssperre 47 im Sinne der Gleichschaltung der Hinterachsantriebswellen erfolgt; demnach ist die Summe der Einzelgeschwindigkeiten der Hinterräder 39, 42 einer Hinterachse gleich der Summe der Geschwindigkeiten der Hinterräder 39, 45 der anderen Hinterachse.

## Patentansprüche

1. Antriebsschlupfregelsystem mit pneumatischer Bremsregelung für Fahrzeuge, insbesondere Nutzfahrzeuge, welche mit einem automatischen Sperrdifferential ausgestattet sind, wobei das Sperrdifferential (9) zum Zwecke des Einrückens seiner Kupplungsklauen (11) durch einen von einem Betätigungsventil gespeisten Druckluftzylinder (5) betätigbar ist und das ASR-Ventil (1) der ABS/ASR-Anlage des Fahrzeugs zugleich das Betätigungsventil für den zum Einrücken der Kupplungsklauen (11) des Sperrdifferentials (9) dienenden Druckluftzylinder (5) bildet, **dadurch gekennzeichnet**, daß die ABS/ASR-Anlage so ausgelegt ist, daß unterhalb eines für das Einlegen der Differentialsperre erforderlichen Mindestdruckes des Druckluftzylinders (5) die ASR-Bremsregelung erfolgt.

2. Antriebsschlupfregelsystem nach Anspruch 1, **dadurch gekennzeichnet**, daß das ASR-Ventil (1) getaktet betreibbar ist, derart, daß im Mittel ein Druck aussteuerbar ist, der unterhalb des Mindestdruckes zum Einlegen der Differentialsperre liegt.

3. Antriebsschlupfregelsystem nach einem der vorangehenden Ansprüche, **dadurch gekennzeichnet**, daß das ASR-Ventil (1) zum Zwecke des Einlegens der Differentialsperre voll durchsteuerbar ist, wenn wenigstens zwei Bedingungen erfüllt sind.

4. Antriebsschlupfregelsystem nach Anspruch 1, **dadurch gekennzeichnet**, daß das Sperrdifferential als Längssperre (47) zwischen den Hinterachsantriebswellen (35, 37) für die Hinterräder (39, 41; 43, 45) vorgesehen ist.

5. Verfahren zum Einlegen der Differentialsperre bei einem Fahrzeug mit einem Antriebsschlupfregelsystem nach Anspruch 1, **gekennzeichnet durch** folgende Schritte:
a) das ASR-Ventil wird bei Erkennung eines Haftwertunterschieds zwischen linkem und rechtem Antriebsrad zum Zwecke der ASR-Bremsregelung getaktet so betrieben, daß im Mittel ein Druck ausgesteuert wird, der unterhalb der Schwelle zum Einlegen der Differentialsperre liegt; und
b) das ASR-Ventil wird zum Zwecke des Einlegens der Differentialsperre voll durchgesteuert, wenn zwei Betriebsbedingungen erfüllt sind.

6. Verfahren nach Anspruch 5, **dadurch gekennzeichnet**, daß die folgenden Betriebsbedingungen vorgegeben sind:
a) das Fahrzeug bewegt sich mit einer bestimmten Mindestgeschwindigkeit; und
b) beide Antriebsräder des Fahrzeugs drehen sich näherungsweise gleich schnell.

7. Verfahren nach Anspruch 5 oder 6, **dadurch gekennzeichnet**, daß die volle Durchsteuerung solange beibehalten wird, bis sichergestellt ist, daß die Sperre eingelegt ist.

8. Verfahren nach einem der Ansprüche 5-7, **dadurch gekennzeichnet**, daß bei voller Durchsteuerung gleichzeitig beide ABS-Drucksteuerventile auf 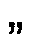 Entlüften" gestellt werden.

9. Verfahren nach einem der Ansprüche 5-8, **dadurch gekennzeichnet**, daß nach Ablauf der zum Einlegen der Sperre erforderlichen Zeit das ASR-Ventil wieder entregt wird, während die ABS-Drucksteuerventile auf 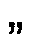 Belüften" gestellt werden.

## Claims

1. Drive slip control system with pneumatic brake controller for vehicles, particularly utility vehicles, fitted with an automatic differential locking device, wherein said differential locking device (9) is designed for actuation by a compressed-air cylinder (5) supplied by an actuating valve for engagement of its clutch dogs (11), and wherein the drive slip control valve (1) of the skid/slip control system of the vehicle constitutes at the same time the actuating valve for said compressed-air cylinder (5) serving for engagement of said clutch dogs (11) of said differential locking device (9), **characterised in** that said skid/slip control system is so designed that the slip control brake control function is performed below a minimum pressure of said compressed-air cylinder (5) which is required for engagement of the differential lock.

2. Drive slip control system according to Claim 1, **characterised in** that said drive slip control valve (1) may be operated in a cycled manner such that on average a pressure can be adjusted which is below the minimum pressure for engagement of the differential lock.

3. Drive slip control system according to any of the preceding Claims, **characterised in** that said drive slip control valve (1) is adapted for being controlled hard completely if at least two conditions are satisfied.

4. Drive slip control system according to Claim 1, **characterised in** that said differential locking device is provided as longitudinal locking device (47) between the rear-axle drive shafts (35, 37) for the rear wheels (39, 41; 43, 45).

5. Method of engaging the differential lock in a vehicle equipped with a drive slip control system according to Claim 1, **characterised** by the following steps:
(a) when a difference in static friction is detected between the left and the right driving wheel said drive slip control valve is operated in a cycled manner for the purpose of drive slip control in such a way that on average a pressure will be adjusted which is below the threshold for engagement of the differential lock; and
(b) the drive slip control valve is completely controlled hard if two operating conditions are satisfied.

6. Method according to Claim 5, **characterised in** that the following operating conditions are defined:
(a) the vehicle is driven at a defined minimum speed; and
(b) both driving wheels of the vehicle are rotating with approximately the same speed.

7. Method according to Claim 5 or 6, **characterised in** that the complete hard-control function is maintained until it is made sure that the lock has been engaged.

8. Method according to any of the Claims 5 to 7, **characterised in** that in the event of complete hard control both skid control pressure control valves are simultaneously set to 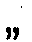 ventilation".

9. Method according to any of the Claims 5 to 8, **characterised in** that upon expiration of the interval required for engagement of the lock the drive slip control valve is deactivated again whilst the skid control pressure control valves are set to 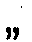 aeration".

## Revendications

1. Système d'antipatinage automatique à régulation de freinage pneumatique pour véhicules, en particulier véhicules utilitaires, munis d'un différentiel autobloquant automatique, dans lequel ledit différentiel autobloquant (9) est apte à être actionné par un cylindre à air comprimé (5) alimenté par un relais d'actionnement pour l'embrayage de ses griffes d'accouplement (11), et dans lequel le relais d'antipatinage à l'accélération (1) du système d'antiblocage/antipatinage du véhicule constitue à même temps le relais d'actionnement pour ledit cylindre à air comprimé (5) qui sert à embrayer lesdites griffes d'accouplement (11) dudit différentiel autobloquant (9), **caractérisé en ce** que ledit système d'antiblocage/antipatinage est conçu de façon que l'actionnement de la fonction de commande de freinage antipatinage soit réalisée au dessous d'une pression minimale dudit cylindre à air comprimé (5), qui est requise pour l'actionnement du verrouillage du différentiel.

2. Système d'antipatinage automatique selon la revendication 1, **caractérisé en ce** que ledit relais de réglage antipatinage automatique (1) peut être actionné de façon synchronisée d'une manière qu'en moyenne une pression puisse être sélectionnée à un niveau au dessous de la pression minimale pour l'actionnement du verrouillage du différentiel.

3. Système d'antipatinage automatique selon une quelconque des revendications précédentes, **caractérisé en ce** que ledit relais de réglage antipatinage automatique (1) est apte à être commandé à pleine utilisation si au moins deux conditions de service sont remplies.

4. Système d'antipatinage automatique selon la revendication 1, **caractérisé en ce** que ledit différentiel autobloquant est conçu sous forme d'un système de verrouillage longitudinal (47) entre les arbres moteurs de pont arrière (35, 37) pour les roues arrières (39, 41; 43, 45).

5. Procédé d'actionnement du verrouillage du différentel dans un véhicule muni d'un système d'antipatinage automatique selon la revendication 1, **caractérisé** par les opérations suivantes::
(a) quand une différence en coefficient d'adhérence est détectée entre la roue de commande gauche et la roue de commande droite, ledit relais de réglage antipatinage automatique est actionné de façon synchronisée afin de régler le freinage en état antipatinage à l'accélération, d'une manière qu'en moyenne une pression soit sélectionnée à un niveau au dessous du seuil d'actionnement du verrouillage du différentiel; et
(b) le relais de réglage antipatinage automatique est commandé à pleine utilisation si deux conditions de service sont remplies.

6. Procédé selon la revendication 5, **caractérisé en ce** que les conditions de service suivantes sont définies:
(a) le véhicule circule à une vitesse minimale définie; et
(b) les deux roues de commande du véhicule tournent à la même vitesse environ.

7. Procédé selon la revendication 5 ou 6, **caractérisé en ce** que la fonction de régage à pleine utilisation est retenue jusqu'à l'actionnement du verrouillage est garanti,

8. Procédé selon une quelconque des revendications 5 à 7, **caractérisé en ce** qu'au cas de réglage à pleine utilisation les deux relais de commande de la pression de réglage antipatinage sont amenés en même temps à 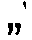 ventilation".

9. Procédé selon une quelconque des revendications 5 à 8, **caractérisé en ce** qu'après l'expiration de l'intervalle requis pour l'actionnement du verrouillage, le relais de réglage antipatinage automatique est désamorcé encore pendant que les relais de commande de la pression de réglage antipatinage sont amenés à 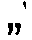 aération".
